# EUROPÄISCHE PATENTSCHRIFT

(11) **EP 1 907 446 B1**
(45) Veröffentlichungstag und Bekanntmachung des Hinweises auf die Patenterteilung: **06.04.2011**
(21) Anmeldenummer: 06777667.4
(22) Anmeldetag: 10.07.2006
(51) Int. Cl.: C08G 73/00, C08G 73/06, G02F 1/00, G02F 1/061, G02F 1/15, G02F 1/361, C09K 9/00, C09K 9/02

(54) **POLYMERE 4,4´-BIPYRIDINIUM-STRUKTUREN, FORMULIERUNG FÜR EINE ELEKTROCHROM AKTIVE SCHICHT UND ANWENDUNG DAZU**
POLYMER 4,4 -BIPYRIDINIUM STRUCTURES, FORMULATIONS FOR AN ELECTROCHROMIC ACTIVE LAYER, AND APPLICATION THEREFOR
STRUCTURES DE 4,4 -BIPYRIDINIUM POLYMERES, FORMULATIONS DESTINEES A UNE COUCHE ELECTROCHROME ACTIVE ET UTILISATION

(30) Priorität: 11.07.2005 DE 102005032316
(43) Veröffentlichungstag der Anmeldung: 09.04.2008
(73) Patentinhaber: SIEMENS AKTIENGESELLSCHAFT, 80333 München (DE)
(72) Erfinder: KANITZ, Andreas, 91315 Höchstadt (DE); ROTH, Wolfgang, 91080 Uttenreuth (DE)
(86) Internationale Anmeldenummer: PCT/EP2006/064048
(87) Internationale Veröffentlichungsnummer: WO 2007/006767

(56) Entgegenhaltungen:
- EP-A- 0 319 156
- EP-A- 1 045 275
- US-A- 3 641 034
- US-A- 3 856 714
- US-A- 4 898 923
- US-A1- 2003 206 326
- LIJUN LIANG ET AL: "PREPARATION OF VIOLOGEN POLYMERS WITH CARBON CHAIN SPACERS AND THEIR APPLICATION TO THE ELECTRON-TRANSFER REACTION IN HETEROPHASES" POLYMERS FOR ADVANCED TECHNOLOGIES, WILEY & SONS, BOGNOR REGIS, GB, Bd. 10, Nr. 1/2, Januar 1999 (1999-01), Seiten 60-64, XP000799437 ISSN: 1042-7147
- AKIRA HARADA ET AL: "COMPLEX FORMATION OF CYCLODEXTRINS WITH CATIONIC POLYMERS" POLYMER JOURNAL, SOCIETY OF POLYMER SCIENCE, TOKYO, JP, Bd. 28, Nr. 2, 15. Februar 1996 (1996-02-15), Seiten 159-163, XP000581235 ISSN: 0032-3896

## Beschreibung

Die Erfindung betrifft neuartige polymere 4,4'-Bipyridinium-Strukturen, auf dieser Basis geschaffene Formulierungen für elektrochrom aktive Schichten und die Anwendung der 4,4'-Bipyridinium-Strukturen zur Herstellung organischer elektrochromer Displays.

Elektrochrome Displays auf Basis organischer Materialien umfassen im Normalfall eine aktive elektrochrome Schicht, die sich im Falle eines Displays zwischen senkrecht zueinander angeordneten Elektroden befindet. Wesentliche Bestandteile der aktiven Schicht sind ein Redox-System und ein pH-aktiver Farbstoff. Durch das Anlegen einer Spannung wird das Konzentrationsverhältnis der Redox-Partner zueinander im Material verschoben. Bei dieser Reaktion werden im Material Protonen und/oder Ionen freigesetzt bzw. gebunden, welches sich auf den pH-Wert auswirkt. Wenn eine Spannung an das Material angelegt wird, dann läuft die Verschiebung des Gleichgewichts der Redox-Partner an den beiden Elektroden in entgegen gesetzter Richtung. Dies führt dazu, dass an der einen Elektrode der pH-Wert steigt, während er an der Gegenelektrode sinkt. Über einen pH-Farbstoff wird die Änderung des pH-Wertes dann in eine Farbänderung des Materials umgesetzt und das Anlegen der Spannung sichtbar gemacht.

Aus WO 02/075441A2 und WO 02/075442 A1 ist bekannt, dass sich zwischen den Elektroden eine pastöse Formulierung, die das elektrochrome System darstellt, befindet. Die Zusammensetzung dieses elektrochromen Systems umfasst als essentielle Bestandteile ein Polymer als Festelektrolyt, ein Leitsalz, ein Redox-System, TiO₂ als Weißpigment, ein Lösungsmittel und einen Farbstoff. Dieser ist in der Regel ein pH-Indikator.

Ein weiteres Prinzip elektrochrome Displays zu verwirklichen besteht darin, die Farbänderung nicht durch die Änderung des pH-Wertes im Display herbeizuführen, sondern die ohnehin stattfindenden Redoxprozesse zu nutzen, um kontrastreiche Farbwechsel durch die Bildung reduktiver und/oder oxidativer Zustände in geeigneten Materialien zu erzeugen. Dabei sind vor allem die so genannten Viologene und Polythiophene als Materialklassen bekannt geworden.

### Beispiele sind in der Literatur:

M. O. M. Edwards: Appl. Phys. Lett. 2005, 86(7) und Helmut W. Heuer, Rolf Wehrmann, Stephan Kirchmeyer: Adv. Funct. Mater. 2002, 89.

Wichtigster Nachteil der bisherigen Erfindungen ist die relativ geringe Lebensdauer solcher elektrochromer Displays.

Bei den pH-Wert-gesteuerten (wo der Ladungstransport über Ionen, - insbesondere Protonen - erfolgt) Displays ist besonders die Vielzahl der Komponenten als Nachteil der Formulierung anzusehen, weil dadurch, zwar von Beginn an nur latent, auch zusätzliche kinetisch oder thermodynamisch gehemmt elektro-chemische Reaktionen parallel ablaufen, jedoch über die Zeit durch massive Verschlechterung des Kontrastes hervortreten. Außerdem kann als Folge der Protonenaktivität der Abbau der transparenten Elektrode erfolgen.

Bei den Displays auf Basis reiner Redoxmaterialien, wie bei den so genannten Viologen-basierten Systemen, tritt die Farbkontrast-Verschlechterung vor allem auch wegen der Pi(II) - Merisation der reduzierten Spezies (Bildung von Aromatenstapeln durch die Π-Elektronenebenen), ein, was zu einer Farbverschiebung von blau nach violett (deshalb Viologene genannt) und auch zu extremer Schwerlöslichkeit führt.

In diesem Zustand lassen sich die pimeren Spezies nicht mehr vollständig elektrisch oxidieren (in den farblosen Zustand zurückverwandeln), so dass der Kontrast bei der Farbänderung immer geringer wird.

Die US 2003/0206326 offenbart zwar auch ein elektrochromes Bauteil mit einer ein 4,4'-Bipyridin enthaltenen Formulierung, jedoch mit einem substituierten Alkylenspacer mit kleiner /gleich 3 linearen Kohlenstoffatomen. Der Druckschrift ist keinerlei Hinweis auf die technische Lehre zu entnehmen, dass die Verbindung als ein Gemisch aus Polymeren, Oligomeren und monofunktionalisierten 4,4'-Pyridinium-Pyridin vorliegt. Ein derart kurzer Alkylenspacer führt zu einer Verbindung, die mit der nunmehr beanspruchten hinsichtlich Löslichkeit und Pimerisierung, also Stapelungsverhalten, nicht vergleichbar ist.

In der EP 1 045 275 A1 werden elektrochrome Formulierungen für elektrochrome Spiegel mit einer 4,4'-Bipyridin-Komponente offenbart, jedoch haben die dort gezeigten Alkylspacer eine Anzahl Kohlenstoffatome (definiert über Index "m") zwischen 1 und 1000. Es handelt sich um Seitenkettenpolymere. Diese Schrift legt nahe, dass die Verbindung immer eine mehr oder weniger einheitliche Kettenlänge zeigt, wenn dort gelehrt wird, dass eine im Sinne der Erfindung brauchbare Verbindung sowohl eine mit hohem Molgewicht als auch eine mit geringem Molgewicht sein könne. Es wird keine spezielle Kettenlänge als bevorzugt offenbart.

Die US 4 898 923 offenbart eine Verbindungsklasse, bei der die beiden Pyridine des Bipyridins immer über einen Aryl-Spacer verbunden sind.

Die EP 0319 156 beschreibt ebenfalls eine Verbindungsklasse bei der auch die beiden Pyridine des Bipyridins immer über einen Aryl-Spacer verbunden sind.

Die US 3 856 714 beschreibt ungleich komplexere Verbindungen mit Bipyridinen.

Die US 3,641034 offenbart eine Verbindungklasse, in der der Alkylenspacer zwischen den 4,4'-Bipyridinium-Einheiten maximal 8 Kohlenstoffatome umfasst.

Die Veröffentlichung LIJUN LIANG ET AL: Preparation of Viologen Polymers with Carbon Chain Spacers and their Application to the Electron-Transfer Reaction in Heterophases, Polymers for Advanced Technologies, Wiley & Sons, Bognor, Regis, GB, Bd. 10, Nr. 1/2, Januar 1999 (1999-01) p. 60-64, XP000799437 beschäftigt sich mit dem Studium des Elektronentransfers von Polyviologen und Azobenzol in Abhängigkeit von der Spacerlänge. Elektrochrome Eigenschaften des Materials werden nicht erwähnt.

Schließlich behandelt die Veröffentlichung von AKIRA HARDA ET AL: Complex Formation of Cyclodextrins with Cattionic Polymers, Polymer Journal, Society of Polymer Science, Tokio, JP, Bd. 28, Nr. 2, 15. Febr. 1996 (1996-02-15) p. 159-163, XP000581235 Polyviologen-Cyclodextrin-Komplexe. Es geht um NMR -Studien der Komplexbildung und damit verbundene shifts im Spektrum. Hier findet sich kein Hinweis auf die elektrochromen Eigenschaften des Materials.

Aufgabe der vorliegenden Erfindung ist es daher, Materialien für eine elektrochrome Formulierung anzugeben, die ohne weitere Zusätze (nur Lösemittel und Pigment) eine verbesserte Langzeitstabilität im Display aufweisen.

Gegenstand der Erfindung und Lösung der Aufgabe sind polymere 4,4'-Bipyridinium-Verbindung, bei der die 4,4'-Bipyridinium-Einheiten durch einen Alkylenspacer voneinander getrennt sind, der 12 Kohlenstoffatome umfasst, wobei in der Verbindung ein Gemisch aus Polymeren, Oligomeren und monofunktionalisierten 4,4'-Pyridinium-pyridinen vorliegt, sowie deren Anwendung in einer Formulierung für elektrochrom aktive Schichten sowie eine elektrochrom aktive Schicht, die zumindest eine Komponente mit einer 4,4'-Bipyridinium-Struktur umfasst, wobei die 4,4'-Bipyridinium-Struktur durch einen Alkylenspacer getrennt sind. Schließlich ist noch die Anwendung einer polymeren 4,4'-Bipyridinium-Struktur nach dem Gegenstand der Erfindung zur Herstellung eines elektrochromen Displays auf organischer Basis.

Als Alkylenspacer wird eine nicht konjugierte lineare C10 bis C20-Kette bezeichnet, die die einzelnen Bipyridinium-Einheiten miteinander verbindet.

Dabei ist es essentiell, dass das gebildete Polymer nur dann die verbesserten Eigenschaften besitzt, wenn es genau nach der Vorschrift in den Ausführungsbeispielen dargestellt wird. Von besonderer Bedeutung ist die Durchführung der Reaktion bei Temperaturen von 80°C - 120°C, vorzugsweise 85°C (Acetonitril). Hierdurch ist sichergestellt, dass im Reaktionsprodukt neben Polymeren auch Oligomere sowie monofunktionalisierte 4,4'-Pyridinium-pyridine enthalten sind.

Folgende elektrochrome Formulierungen, zumindest eine Komponente folgender Struktur umfassend, werden vorgeschlagen: 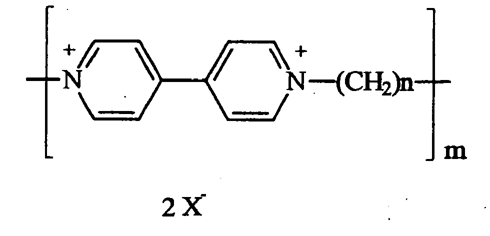 n = 10 - 20;
m = 10 - 200;
X = beliebiges Anion, bevorzugt Halogenid und/oder Trifluormethyl-sulfonat,

Darüber hinaus enthält das nach der beschriebenen Vorschrift dargestellte Material auch Anteile monofunktioneller Spezies. Der Hauptanteil des erfindungsgemäßen Materials sind Strukturen auf Basis von 4,4'-Bipyridinium-ionen, die wegen der strukturellen Eigenschaften keine viologenen Eigenschaften mehr besitzen. Insbesondere bewirkt das Merkmal n = 10 bis 20, dass die Wahrscheinlichkeit, dass eine n-Merisierung durch Bildung von Aromatenstapeln eintritt so gering ist, dass eine gleichmäßige reversible Reduktion über viele Zyklen hinweg zu erwarten ist. Bei Polymeren aus den bekannten Viologenen, die aus 4,4'-Bipyridinium-Stukturen mit einem Alkylenspacer, der kleiner als C₁₀ ist, dargestellt werden, tritt Pimerisation auf. Bei den nicht polymeren 4,4'-Bipyridiniumsalzen tritt die Pimerisation sowieso auf, wenn auch nicht immer gleich intensiv.

Viologene sind 4,4'-Bipyridinium-Stukturen, die bei der Reduktion zusätzlich Pimerisieren, was in einem hypsochromen Farbshift (von Blau nach Violett) sichtbar wird und durch die Bildung einer extrem unlöslichen polymeren Verbindung charakterisiert ist. Die extreme Unlöslichkeit des Pimers bewirkt mit der Zeit eine Restverfärbung des EC-Bauelements, weil die Reoxidation nicht mehr 100%-ig umkehrbar ist. Weiterer Nachteil solcher Bauelemente ist der konzentrationsabhängige Farbshift.

Erfindungsgemäße 4,4'-Bipyridinium-Strukturen, die keine viologenen Eigenschaften besitzen, sind entsprechende polymere 4,4'-Bipyridinium-Strukturen, die durch einen Alkylenspacer (C10 bis C20) voneinander getrennt sind.

Der Spacer verleiht dem Polymer eine gute Löslichkeit in organischen Lösungsmitteln und verhindert die Pimerisation, so dass die 4,4'-Bipyridinium-einheiten keine Nahordnung durch Stapelung eingehen können. Die Farbe der reduzierten Form bleibt stabil blau (spektroskopischer Nachweis), und das Polymer bleibt im reduzierten Zustand in polaren und dipolar aprotischen Lösungsmitteln (wie Propylencarbonat, Butyrolacton, Alkoholen, Glycolen) gut löslich. Besonders vorteilhaft ist der Dodecylen-spacer, der keine Viologeneigenschaften mehr erlaubt und trotzdem noch eine gute Leitfähigkeit des Materials zulässt.

Der Anteil an monofunktionellen 4,4'-Pyridinium-pyridin-Spezies wirkt in der erfindungsgemäßen Formulierung als Elektronendonor und bewirkt damit den Elektronentransport, gleichzeitig gewährleistet diese Spezies die Anodenreaktion. Weiterhin wird durch eine Monoalkylierung ein Material erhalten, das auf Grund der Polarität der Endgruppe eine verbesserte Löslichkeit und damit erhöhte Stabilität der Formulierung in der elektrochromen Zelle bewirkt.

Darüber hinaus wird durch das erfindungsgemäße Material ein rein blauer Farbeindruck erhalten und nicht wie mit Polymeren ein violetter oder blaugrüner Farbeindruck. Dabei ist der violette Farbeindruck namensgebend für diese Verbindungsklasse (Viologen).

Durch Verwendung des erfindungsgemäßen Materials können außerdem überraschenderweise Formulierungen unter Umgebungsbedingungen hergestellt und verarbeitet werden.

Der Einsatz einer Formulierung, ein polymeres 4,4'-Bipyridinium-salz umfassend, erlaubt die kantenscharfe, kontrastreiche Abbildung von Pixeln, hohe Schaltgeschwindig-keit bei Spannungen unter 1V ohne Einsatz eines Leitsalzes und damit eine verbesserte Bildwiedergabe mit verbesserter Lebensdauer.

Auf diese Weise kann man die erfindungsgemäßen 4,4'-Bipyridiniumsalze im elektrischen Feld kathodisch "Blaufärben" und anodisch das farblose (weiße) Bipyridinium-salz wieder zurückbilden.

### Ausführungsbeispiele:

### a) Poly-dodecylen-4,4'-bipyridinium-dibromid:

0,1 mol 4,4'-Bipyridin und 0,1 mol Dodecylendibromid werden in 500ml Acetonitril unter Rühren für 10h zum Sieden erhitzt. Nach Abkühlung wird das Reaktionsgemisch mit 200ml Ether versetzt abgesaugt, und gründlich mit Ether, gemischt mit 5% Methanol, gewaschen. Die Ausbeute beträgt 95%

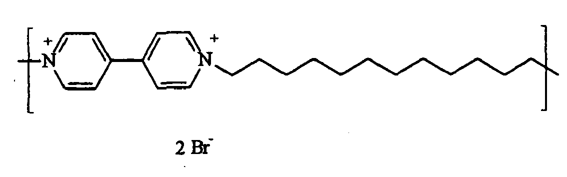

### b) Poly-dodecylen-4,4'-bipyridinium-trifluormethylsulfonat:

0,1 mol 4,4'-Bipyridin und 0,1 mol Dodecylendibromid werden in 500ml Acetonitril unter Rühren für 10h zum Sieden erhitzt. Nach Abkühlung wird das Reaktionsgemisch mit 200ml Ether versetzt abgesaugt, und gründlich mit Ether und einem Zusatz von 5% Methanol gewaschen. Danach wird das abgesaugte Produkt in 100ml Methanol gelöst und mit einer Lösung von 0,2 mol Silber-trifluormethylsulfonat in 50ml Methanol behandelt. Das dabei ausfallende Silberbromid wird abgesaugt, das Filtrat eingeengt und schließlich mit Ether gefällt und gewaschen. Die Ausbeute beträgt 75%

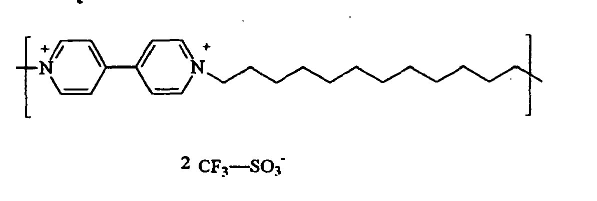

### c) Herstellung einer elektrochromen Formulierung:

0.6g erfindungsgemäßes EC-Polymer a) werden mit 6g TiO₂ und 2g Diethylenglykol in einem Speedmixer intensiv vermischt.

### d) Herstellung eines EC-Bauelements:

Die Formulierung c) wird zwischen zwei transparenten, leitfähigen Substraten appliziert, die durch einen Kleberahmen verbunden sein können. Beim Anlegen einer Gleichspannung von ca. 1V wird jeweils die Kathode von weiß nach blau verfärbt.

Durch die Erfindung werden erstmals Materialsysteme vorgeschlagen, in denen elektro- und/oder photochemische Parallelreaktionen durch stabilisierende strukturelle Veränderungen ganz vermieden werden oder deren Zurückdrängung wegen der strukturellen Veränderungen um Größenordnungen erfolgt. Die Erfindung betrifft polymere 4,4'-Bipyridinium-Strukturen, auf dieser Basis geschaffene Formulierungen für elektrochrom aktive Schichten und die Anwendung der 4,4'-Bipyridinium-Strukturen zur Herstellung organischer elektrochromer Displays.

## Patentansprüche

1. Polymere 4,4'-Bipyridinium-verbindung, bei der die 4,4'-Bipyridinium-Einheiten durch einen Alkylenspacer voneinander getrennt sind, der 12 Kohlenstoffatome umfasst, wobei in der Verbindung ein Gemisch aus Polymeren, Oligomeren und monofunktionalisierten 4,4'-Pyridinium-pyridinen vorliegt.

2. 4,4'-Bipyridinium-Verbindung nach Anspruch 1, erhältlich durch Umsetzung von 4,4'-Bipyridin und Dodecylendihalogenid bei Temperaturen von 80°C bis 120°C.

3. 4,4'-Bipyridinium-Verbindung nach einem der Ansprüche 1 oder 2, erhältlich durch Umsetzung von 4,4'-Bipyridin und Dodecylendibromid.

4. 4,4'-Bipyridinium-Verbindung nach einem der vorstehenden Ansprüche, erhältlich durch Umsetzung von 4,4'-Bipyridin und Dodecylendihalogenid bei einer Temperatur von 85°C.

5. Formulierung für eine elektrochrom aktive Schicht
**dadurch gekennzeichnet, dass** sie zumindest eine Komponente mit einer 4,4'-Bipyridinium-Struktur nach einem der Ansprüche 1 bis 4 umfasst.

6. Anwendung einer polymeren 4,4'-Bipyridinium-Struktur nach einem der Ansprüche 1 bis 4 zur Herstellung einer elektrochrom aktiven Schicht.

7. Anwendung einer polymeren 4,4'-Bipyridinium-Struktur nach einem der Ansprüche 1 bis 4 zur Herstellung eines elektrochromen Displays auf organischer Basis.

## Claims

1. Polymer 4, 4'-bipyridinium compound in which the 4, 4'-bipyridinium units are separated from each other by an alkaline spacer which consists of 12 carbon atoms, with a mixture of polymers, oligomers and monofunctionalised 4, 4'-pyridinium pyridines being present in the compound.

2. 4, 4'-bipyridinium compound according to claim 1, obtainable by converting 4, 4'-bipyridine and dodecylene dihalogenide at temperatures of 80°C to 120°C.

3. 4, 4'-bipyridinium compound according to one of claims 1 or 2, obtainable by converting 4, 4'-bipyridine and dodecylene dibromide.

4. 4, 4'-bipyridinium compound according to one of the preceding claims, obtainable by converting 4, 4'-bipyridine and dodecylene dihalogenide at a temperature of 85°C.

5. Formulation for an electrochromic active layer, **characterised in that** it comprises at least one component with a 4, 4'-bipyridinium structure according to one of claims 1 to 4.

6. Application of a polymer 4, 4'-bipyridinium structure according to one of claims 1 to 4 for producing an electrochromic active layer.

7. Application of a polymer 4, 4' bipyridinium structure according to one of claims 1 to 4 for producing an organic electrochromic display.

## Revendications

1. Composé polymère de 4,4'-bipyridinium, dans lequel les unités de 4,4'-bipyridinium sont séparées l'une de l'autre par un groupe alkylène faisant office d'espaceur, qui comprend 12 atomes de carbone, un mélange de polymères, d'oligomères et de 4,4'-pyridinium-pyridines monofonctionnalisées étant présent dans le composé.

2. Composé de 4,4'-bipyridinium selon la revendication 1, que l'on obtient par la mise en réaction de la 4,4'-bipyridine et d'un dihalogénure de dodécylène à des températures de 80°C à 120°C.

3. Composé de 4,4'-bipyridinium selon l'une quelconque des revendications 1 ou 2, que l'on obtient par la mise en réaction de la 4,4'-bipyridine et du dibromure de dodécylène.

4. Composé de 4,4'-bipyridinium selon l'une quelconque des revendications précédentes, que l'on obtient par la mise en réaction de la 4,4'-bipyridine et d'un dihalogénure de dodécylène à une température de 85°C.

5. Formulation pour une couche à activité électrochrome, **caractérisée en ce qu'**elle comprend au moins un composant possédant une structure de 4,4'-bipyridinium selon l'une quelconque des revendications 1 à 4.

6. Utilisation d'une structure polymère de 4,4'-bipyridinium selon l'une quelconque des revendications 1 à 4, pour la fabrication d'une couche à activité électrochrome.

7. Utilisation d'une structure polymère de 4,4'-bipyridinium selon l'une quelconque des revendications 1 à 4, pour la fabrication d'un affichage électrochrome à base organique.
